# EUROPÄISCHE PATENTSCHRIFT

(11) **EP 2 711 157 B1**
(45) Veröffentlichungstag und Bekanntmachung des Hinweises auf die Patenterteilung: **23.12.2015**
(21) Anmeldenummer: 13185232.9
(22) Anmeldetag: 19.09.2013
(51) Int. Cl.: B29C 49/12, B29C 49/36, B29C 49/42

(54) **Blasformmaschine mit Dämpfung für deren Steuerung und Verfahren**
Blow-moulding machine with damping for controlling the same and process
Machine de formage par soufflage avec amortissement pour sa commande et procédé

(30) Priorität: 25.09.2012 DE 102012109024
(43) Veröffentlichungstag der Anmeldung: 26.03.2014
(73) Patentinhaber: Krones AG, 93073 Neutraubling (DE)
(72) Erfinder: Voth, Klaus, 93073 Neutraubling (DE); Finger, Dieter, 93073 Neutraubling (DE); Geltinger, Florian, 93073 Neutraubling (DE); Brinster, Paul, 93073 Neutraubling (DE)
(74) Vertreter: Bittner, Bernhard

(56) Entgegenhaltungen:
- EP-A2- 2 383 102
- DE-A1- 19 528 751
- DE-A1-102010 011 244
- DE-A1-102010 028 253
- US-A1- 2010 316 757
- US-A1- 2011 081 441

## Beschreibung

Die vorliegende Erfindung bezieht sich auf eine Vorrichtung zum Umformen von Kunststoffvorformlingen zu Kunststoffbehältnissen. Solche Vorrichtungen sind z.B. in den Dokumenten DE 10 2010 011 244, EP-A-2383 102 und DE 195 28751 beschrieben. In der Getränke herstellenden Industrie ist es bekannt, dass Kunststoffflaschen aus Kunststoffvorformlingen hergestellt werden, die zunächst erwärmt und anschließend mittels Blasdüsen expandiert werden. Eine derartige Umformungseinrichtung, im Folgenden auch als Streckblasmaschine bezeichnet, weist üblicherweise eine Transporteinrichtung auf, wie etwa ein Blasrad, an dem eine Vielzahl von Umformungsstationen bzw. Blasstationen angeordnet ist. Diese Blasstationen einer derartigen Streckblasmaschine sind dabei das Herzstück, in denen die Kunststoffvorformlinge durch das Anlegen eines Innendrucks zu den Kunststoffflaschen geblasen werden. Der vorgewärmte Kunststoffvorformling - im Folgenden auch als Preform bezeichnet - wird dabei zwischen den Formträgern in der Form positioniert. Nach dem Recken durch eine Reckstange, die üblicherweise von einer Antriebseinrichtung, wie beispielsweise einem Linearmotor, angetrieben wird, folgt der eigentliche Aufblasprozess. Der angelegte Innendruck presst den Kunststoffvorformling von innen gegen die Form, wodurch das Behältnis seine gewünschte Form annimmt.

Im Rahmen eines derartigen Blasformprozesses treten dabei die unterschiedlichsten Bewegungen auf, wie etwa die Bewegung der Blasformteile zum Öffnen und Schließen der Blasform, die Bewegungen der Reckstange, die Bewegungen einer Blasdüse und dergleichen. Durch den Blasvorgang und die kinematische Bewegung beim Öffnen und Schließen der Formträger entstehen damit relativ hohe Prozesskräfte, welche auch die vollständige Umformungsstation zum Schwingen bringen. Da üblicherweise auch elektronische Bauteile, wie beispielsweise Servoumrichter, starr an der Blasstation angeordnet sind, werden die beschriebenen Prozesskräfte direkt an diese weitergegeben. Einige der in den Blasstationen verbauten und verwendeten elektronischen Einrichtungen können dann diesen Beschleunigungskräften bzw. den auftretenden Schwingungen nicht standhalten und es kommt häufig zu deren Ausfall.

Der vorliegenden Erfindung liegt daher die Aufgabe zugrunde, die Lebensdauer dieser elektronischen Geräte bzw. Steuerungseinrichtungen zu verbessern und insbesondere die auf diese Steuerungseinrichtungen bzw. elektronischen Bauteile wirkenden Kräfte bzw. Beschleunigungen zu verringern.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, an der eine Vielzahl von Umformungsstationen zum Umformen der Kunststoffvorformlinge angeordnet ist. Dabei weisen diese Umformungsstationen jeweils wenigstens zwei zueinander bewegliche Blasformteile auf, die zwischen einem geöffneten Zustand und einem geschlossenen Zustand der Umformungsstation bewegt werden können und in dem geschlossenen Zustand der Umformungsstation einen Hohlraum ausbilden, innerhalb dessen die Kunststoffvorformlinge zu den Kunststoffbehältnissen umformbar sind. Weiterhin weisen die Umformungsstationen jeweils eine Beaufschlagungseinrichtung auf, welche die Kunststoffvorformlinge zu deren Expansion mit einem gasförmigen Medium und insbesondere mit Druckluft beaufschlagen.

Weiterhin weisen die Umformungsstationen jeweils Reckstangen auf, welche in die Kunststoffvorformlinge einführbar sind, um diese in deren Längsrichtung zu dehnen.

Weiterhin weisen die Umformungsstationen jeweils wenigstens eine Antriebseinrichtung auf, welche eine für den Umformungsvorgang erforderliche Bewegung antreibt. Daneben ist auch eine Steuerungseinrichtung zum Steuern dieser Antriebseinrichtung vorgesehen.

Vorteilhaft ist dabei diese Steuerungseinrichtung mittels einer Dämpfungseinrichtung an der Vorrichtung und insbesondere an wenigstens einer Umformungsstation angeordnet.

Dabei ist es möglich, dass jeder Umformungsstation eine derartige Steuerungseinrichtung zugeordnet ist, es wäre jedoch auch möglich, dass eine Steuerungseinrichtung zum Ansteuern mehrerer Umformungsstationen dient. Auch könnten an einer Umformungsstation mehrere Steuerungseinrichtungen -insbesondere mittels Dämpfungseinrichtungen - angeordnet sein.

Wie oben erwähnt, ist angesichts der relativ hohen physikalischen Belastung durch Prozesskräfte auf die empfindlichen elektronischen Bauteile stets mit einer hohen Ausfallquote zu rechnen. Die Erfindung schlägt daher vor, die im Stand der Technik üblicherweise starre Verbindung mit der Vorrichtung bzw. der Umformungsstation zu lösen. Diese wird stattdessen durch eine schwimmende bzw. gedämpfte Verbindung ersetzt. Bei er der für den Umformungsvorgang erforderlichen bzw. verwendeten Bewegung kann es sich etwa um eine Bewegung der Reckstange, einer Blasdüse oder auch um eine Schwenkbewegung der beiden Blasformteile bzw. Seitenteile oder aber auch um eine Bewegung einer Bodenform für die Blasform handeln.

Vorteilhaft handelt es sich bei der Transporteinrichtung um eine drehbare Transporteinrichtung und insbesondere um ein Blasrad, wobei die Vielzahl von Umformungsstationen bzw. Blasstationen an einem Außenumfang dieses Blasrads angeordnet ist.

Bevorzugt ist wenigstens eine Antriebseinrichtung eine elektromotorische Antriebseinrichtung. Daneben könnte es sich bei dieser Antriebseinrichtung jedoch auch um eine magnetische, hydraulische oder pneumatische Antriebseinrichtung handeln. Die Steuerungseinrichtung weist dabei bevorzugt eine Vielzahl von elektronischen Bauteilen und insbesondere von Halbleiterbauteilen auf.

Bei einer weiteren vorteilhaften Ausführungsform ist eine Antriebseinrichtung zum Bewegen der Reckstange vorgesehen sowie eine Steuerungseinrichtung zum Steuern dieser Antriebseinrichtung und diese Steuerungseinrichtung zum Steuern der Antriebseinrichtung ist bevorzugt mittels der Dämpfungseinrichtung an der Umformungsstation angeordnet.

Vorteilhaft ist dabei die Steuerungseinrichtung an einen Träger der besagten Umformungsstation angeordnet.

Bei einer weiteren vorteilhaften Ausführungsform weist die Steuerungseinrichtung wenigstens eine Umrichtereinheit bzw. einen Umrichter auf. Vorzugsweise handelt es sich dabei insbesondere um einen Servoumrichter, der zum Ansteuern der Antriebseinrichtung(en) dient. Diese Antriebseinrichtung(en) sind vorteilhaft als Servo - Linearmotoren ausgeführt.

Bei einer weiteren vorteilhaften Ausführungsform ist die Steuerungseinrichtung auf einem Träger angeordnet und dieser Träger ist wiederum mittels der wenigstens einen Dämpfungseinrichtung an der Umformungsstation angeordnet.

Bei einer weiteren vorteilhaften Ausführungsform weist die Dämpfungseinrichtung mehrere Dämpfungselemente auf, mittels denen die Steuerungseinrichtung an der Umformungsstation angeordnet ist. Vorteilhaft sind dabei die einzelnen Dämpfungselemente zueinander beabstandet. Damit wird vorteilhaft die Steuerungseinrichtung bzw. der Träger, an dem die Steuerungseinrichtung angeordnet ist, mit einer Mehrpunktlagerung an der Umformungsstation gelagert. Vorteilhaft sind wenigstens zwei Dämpfungselemente und bevorzugt drei Dämpfungselemente vorgesehen, um die Steuerungseinrichtung zu lagern. Dabei ist es möglich, dass diese drei Dämpfungselemente ein gleichschenkliges Dreieck aufspannen, mittels denen die Steuerungseinrichtung bzw. deren Träger gelagert ist. Auf diese Weise kann eine besonders effiziente Dämpfung erreicht werden.

Vorteilhaft weist wenigstens eine Dämpfungseinrichtung eine symmetrische Gestalt und insbesondere einen kreisförmigen Querschnitt auf. Auf diese Weise kann eine gleiche Dämpfung unabhängig von einer Belastungsrichtung in einer vorgegebenen Ebene erreicht werden.

Bei einer weiteren vorteilhaften Ausführungsform weist die Dämpfungseinrichtung wenigstens ein aus einem Elastomer hergestelltes Dämpfungselement auf. Allgemein ist wenigstens ein Dämpfungselement wenigstens bereichsweise aus einem Kunststoff bzw. Elastomer hergestellt. Dabei kann dieses Dämpfungselement zwischen zwei härteren Bauteilen, insbesondere zwei Metallteilen, angeordnet sein.

Auf diese Weise besteht keine metallische Verbindung zwischen der Steuerungseinrichtung bzw. deren Träger und der Umformungsstation.

Bei einer weiteren vorteilhaften Ausführungsform ist ein Ende eines Elements zur Schwingungsentkopplung fest mit der Umformungsstation und das andere Ende fest mit den Trägern bzw. den Bauteilen der Steuerungseinrichtung verbunden, wobei sich zwischen diesen beiden Enden ein Elastomer befindet.

So wäre es beispielsweise möglich, dass die besagten Verbindungselemente bzw. Dämpfungselemente und damit auch die Dämpfungseinrichtung direkt etwa mit einem Element des Reckstangenantriebs und insbesondere einem Stator dieses Reckstangenantriebs verbunden sind.

Bei einer weiteren vorteilhaften Ausführungsform weist die Dämpfungseinrichtung ein Dämpfungselement auf, welches eine Dichte von weniger als 2,1 g/cm³ aufweist. Derartige Materialien sind besonders zur Verwendung in den vorliegenden Maschinen geeignet.

Bei einer weiteren vorteilhaften Ausführungsform ist eine Kühleinrichtung zum Kühlen der Steuerungseinrichtung und/oder des von dieser Steuerungseinrichtung gesteuerten Antriebs vorgesehen. Dabei ist es möglich, dass der oben besagte Antrieb und insbesondere dessen Stator, das heißt der Stator des Reckantriebs und auch die Trägerplatte bzw. die Steuerungseinrichtung und andere elektronische Bauteile gemeinsam mit einem Kühlmedium versorgt werden. Dabei ist es möglich, dass diese Bauteile durch eine Flüssigkeit gekühlt werden, es wäre jedoch auch eine Gaskühlung bzw. eine Luftkühlung möglich. So könnte etwa der oben erwähnte Träger, auf dem die Steuerungseinrichtung angeordnet ist, Kühlkanäle aufweisen. Vorzugsweise ist eine Verbindungsleitung zwischen der Kühleinrichtung, welche den Antrieb selbst kühlt und dem besagten Träger angeordnet. Vorteilhaft kühlt dabei ein Kühlmedium zunächst den Antrieb und dann (bzw. stromabwärts) dessen Steuerungseinrichtung.

Bei einer weiteren vorteilhaften Ausführungsform ist die Dämpfungseinrichtung innerhalb eines Teilkreises der Transporteinrichtung vorgesehen. Auf diese Weise wird erreicht, dass sich die mitdrehende Masse weiter in Richtung des Zentrums der Transporteinrichtung bzw. des Blasrades befindet.

Bei einer weiteren vorteilhaften Ausführungsform ist die Anordnung zur Schwingungsentkopplung innerhalb des Teilkreises des Blasrades angeordnet und/oder in einer senkrechten bzw. radialen Richtung hinter einer Reckstangenachse.

Es wäre jedoch auch möglich, dass sich die Steuerungseinrichtung gegebenenfalls gemeinsam mit der Dämpfungseinrichtung hinter einem Formträger der Blasstation oder auch hinter einer Blasdüse befindet. Dies bedeutet, dass die Höhe, auf der die Steuerungseinrichtung angeordnet ist, variieren kann, insbesondere in Abhängigkeit von dem gesteuerten Antrieb.

Bei einer weiteren vorteilhaften Ausführungsform ist eine Steuerungseinrichtung vorgesehen, die mehreren Blasstationen zugeordnet ist, bzw. die mehrere Blasstationen ansteuert. Dabei handelt es sich hier insbesondere um eine der oben genannten schwingungsentkoppelten Steuerungseinrichtungen.

Es wäre dabei auch möglich, dass eine derartige Steuerungseinrichtung, die insbesondere schwingungsentkoppelt ist, sich zwischen den Blasstationen befindet.

Zusätzlich oder alternativ wäre es auch möglich, die Steuerungseinrichtung (ggfs. gemeinsam mit einem Träger) nicht an den Umformungsstationen anzuordnen, sondern an dem Blasrad. Falls die Steuerungseinrichtung an dem Blasrad angeordnet ist, kann gegebenenfalls sogar auf die oben beschriebenen Dämpfungseinrichtungen verzichtet werden, da das Blasrad bereits aufgrund seiner hohen Masse wesentlich weniger Schwingungen unterworfen ist, als die einzelnen Umformungsstationen. Dabei wäre es also möglich, im Gegensatz zu Vorrichtungen aus dem Stand der Technik, die Steuerungseinrichtungen zum Steuern der einzelnen Antriebe der Umformungsstationen nicht an den Umformungsstationen selbst anzuordnen, sondern an der Transporteinrichtung bzw. dem Blasrad. Vorteilhaft wäre es dabei möglich, dass die Steuerungseinrichtung relativ weit innen auf dem Blasrad angeordnet ist, um so die jeweiligen Fliehkräfte zu verringern.

Die vorliegende Erfindung ist weiterhin auf ein Verfahren zum Umformen von Kunststoffvorformlingen zu Kunststoffbehältnissen gerichtet, wobei Kunststoffvorformlinge mittels wenigstens einer an einer Transporteinrichtung angeordneten Umformungsstation zu den Kunststoffbehältnissen umgeformt werden und zum Zweck dieser Umformung mittels wenigstens einer Beaufschlagungseinrichtung mit einem fließfähigen Medium beaufschlagt werden.

Dabei führt die Unformungsstation zur Umformung der Kunststoffvorformlinge mit wenigstens einer Antriebseinrichtung und bevorzugt mit mehreren Antriebseinrichtungen wenigstens eine und bevorzugt eine Vielzahl von Bewegungen durch und diese Antriebseinrichtung wird von einer Steuerungseinrichtung gesteuert.

Erfindungsgemäß wird die Steuerungseinrichtung mittels einer Dämpfungseinrichtung derart an der Vorrichtung angeordnet, dass durch die Bewegungen hervorgerufene Schwingungen nicht ungedämpft bzw. zumindest teilweise gedämpft an die Steuerungseinrichtung übertragen werden.

Es wird daher auch verfahrensseitig vorgeschlagen, dass die im Rahmen des Umformungsvorgangs entstehenden Schwingungen insbesondere der Umformungsstation nur gedämpft auf die Steuerungseinrichtung übertragen werden, so dass die sensiblen elektronischen Elemente geschont werden. Vorteilhaft werden die Kunststoffvorformlinge zum Zweck ihrer Umformung mittels einer Reckstange in ihrer Längsrichtung gedehnt. Vorteilhaft wird auch eine durch die Bewegung dieser Reckstange erzeugte Bewegung bzw. Schwingung nur gedämpft an die Steuerungseinrichtung übertragen. Vorteilhaft wird für das erfindungsgemäße Verfahren eine Vorrichtung der oben beschriebenen Art eingesetzt.

Weitere Vorteile und Ausführungsformen ergeben sich aus den beigefügten Figuren.

Darin zeigen:
- Fig. 1: eine Ansicht einer erfindungsgemäßen Umformungseinrichtung;
- Fig. 2: eine Detailansicht der in Figur 1 gezeigten Vorrichtung;
- Fig. 3: eine weitere Detailansicht der in Figur 1 gezeigten Vorrichtung; und
- Fig. 4: eine weitere Detailansicht der in Figur 1 gezeigten Vorrichtung;
- Fig. 5a, b: zwei Darstellungen zur Veranschaulichung der Kühlung;
- Fig. 6a, b: zwei weitere Darstellungen zur Veranschaulichung der Dämpfung; und
- Fig. 7a-d: drei weitere Darstellungen zur Veranschaulichung der Dämpfung.

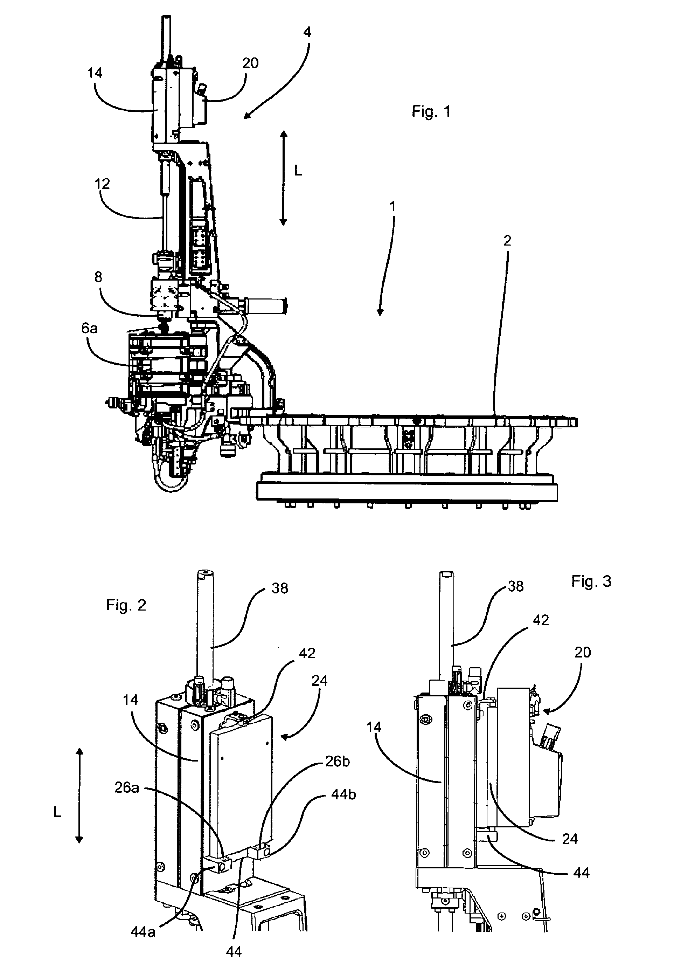

Fig. 1 zeigt eine teilweise Darstellung einer erfindungsgemäßen Vorrichtung 1 zum Umformen von Kunststoffvorformlingen zu Kunststoffbehältnissen. Diese weist dabei eine Transporteinrichtung 2 auf, an der eine Vielzahl von Umformungsstationen 4 (nur eine gezeigt) angeordnet ist. Diese Umformungsstationen (im folgenden auch als Blasstationen bezeichnet) 4 weisen dabei jeweils Beaufschlagungseinrichtungen in Form jeweils einer Blasdüse 8 auf, die in einer Längsrichtung L bewegbar und auf Mündungen der im Inneren zweier Blasformträger 6a, 6b (nur der Blasformträger 6a ist sichtbar) angeordneten Kunststoffvorformlinge 10 aufgesetzt wird, um diese mit Druckluft zu deren Expansion zu beaufschlagen. Weiterhin ist eine Antriebseinrichtung vorgesehen, welche diese Beaufschlagungseinrichtung 8 in der Längsrichtung L bewegt. Weiterhin weist die Vorrichtung einen Ventilblock auf, der eine Vielzahl von Ventilen aufweist, mit denen die Zuführung der Blasluft zu den Kunststoffvorformlingen gesteuert werden kann.

Das Bezugszeichen 12 kennzeichnet eine Reckstange, die im Rahmen des Umformungsprozesses in die Kunststoffvorformlinge 10 einführbar ist, um diese in der Längsrichtung L zu dehnen. Auch diese Reckstange 12 wird damit in der Längsrichtung L bewegt. Das Bezugszeichen 14 kennzeichnet einen Antrieb, der diese Bewegung der Reckstange 12 durchführt. Hierbei handelt es sich insbesondere um einen Linearmotor. Zur Steuerung dieses Linearmotors 14 ist eine Steuerungseinrichtung 20 vorgesehen, welche insbesondere auch einen Servoumrichter aufweist. Das Bezugszeichen 10 kennzeichnet den Kunststoffvorformling, der mit Hilfe der Blasluft expandiert wird. Der Vorformling ist allerdings hier nur teilweise erkennbar, da sich ein Großteil desselben bereits innerhalb der Blasformen befindet. An den gezeigten Blasformträgern 6a sind üblicherweise Trägerschalen angeordnet und an diesen Trägerschalen wiederum Blasformteile. Diese Blasformteile bilden dabei gemeinsam den Hohlraum aus, innerhalb dessen die Kunststoffvorformlinge zu den Kunststoffbehältnissen expandiert werden.

Bei der Herstellung der Behältnisse wird ein vorgewärmter Kunststoffvorformling zwischen den Formträgern in der Form positioniert. Nach dem Recken durch die Reckstange, die, wie oben erwähnt, von einem Linearmotor angetrieben wird, folgt der eigentliche Aufblasprozess.

Der angelegte Innendruck presst den Kunststoffvorformling von innen gegen die Blasform, wodurch die Flasche die gewünschte Form annimmt.

Damit tritt während des Umformungsprozesses eine Vielzahl von unterschiedlichen Bewegungen auf, wie die Bewegung der Blasdüse, die Bewegung der Reckstange, das Öffnen und Schließen der Blasformträger und dergleichen. Angesichts der relativ hohen physikalischen Belastung durch diese Prozesskräfte auf die empfindlichen elektronischen Bauteile ist stets mit einer hohen Ausfallquote zu rechnen.

Figur 2 zeigt eine detaillierte Darstellung der erfindungsgemäßen Vorrichtung insbesondere mit einer Veranschaulichung der erfindungsgemäßen Anordnung der Steuerungseinrichtung 20. Dabei zeigt Figur 2 eine Detaildarstellung des Bereiches der Antriebseinrichtung 14. Man erkennt, dass an dieser Antriebseinrichtung 14 ein Träger 24 bzw. eine Trägerplatte angeordnet ist.

Figur 2 zeigt damit eine Detaildarstellung der in Figur 1 gezeigten Vorrichtung und insbesondere demjenigen Bereich der Vorrichtung, in dem die Antriebseinrichtung zum Antreiben der Reckstange 12 angeordnet ist. Es wird darauf hingewiesen, dass entsprechende Anordnungen auch bei dem Antrieb zur Bewegung der Blasdüse oder auch der Formträgerteile denkbar sind. An der Antriebseinrichtung 14, genauer deren Stator, ist der Träger 24 angeordnet. Dieser Träger 24 ist hier an zwei Halteeinrichtungen 42 und 44 über Dämpfungselemente 26a, 26b, 26c befestigt. Diese Dämpfungselemente 26a, 26b, 26c bilden hier die Dämpfungseinrichtung 26

Auf diese Weise ist der Träger 24 "schwimmend" an der Antriebseinrichtung 14 bzw. an einem Träger der Umformungsstation angeordnet. Bei der Halteeinrichtung 42 handelt es sich hier um einen Befestigungswinkel, der beispielsweise an der Antriebseinrichtung 14 angeschraubt werden kann. Die Dämpfungselemente 26a, 26b und 26c können beispielsweise als Gummipuffer ausgeführt sein. Das Bezugszeichen 44 kennzeichnet eine Stützleiste, welche wiederum zwei Halteelemente 44a und 44b aufweist, welche über die Dämpfungselemente 26a, b, c den Träger halten.

Figur 3 zeigt eine Seitenansicht der in Figur 2 gezeigten Vorrichtung. In diesem Fall ist an dem Träger 24 auch die Steuerungseinrichtung 20, welche beispielsweise einen Servoumrichter aufweisen kann, angeordnet. Man erkennt auch hier wieder die Halteelemente 42 und 44, wobei das Halteelement 42 hier als Haltewinkel ausgeführt ist und die Halteelemente 44 als Elemente, die an der Stützleiste 44 angeordnet sind. Das Bezugszeichen 38 kennzeichnet ein sich in der Richtung L auf und ab bewegendes Sekundärteil des Antriebs 14.

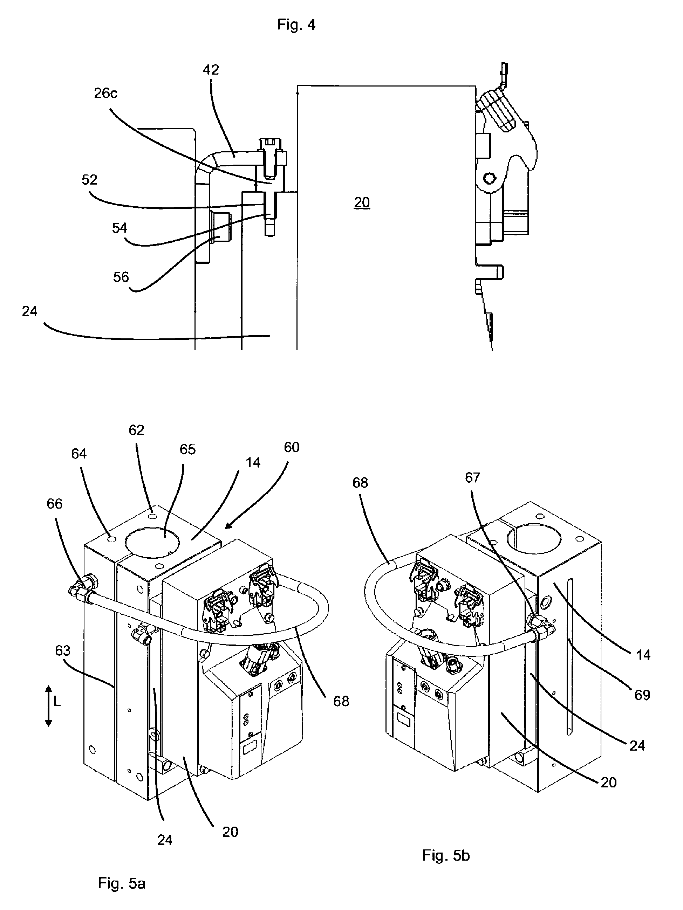

Figur 4 zeigt eine detaillierte Darstellung der Dämpfung. Auch hier ist wieder der Träger 24 bzw. die Trägerplatte mit der daran fest angeordneten Steuerungseinrichtung 20 zu sehen. Auch ist hier detailliert das Halteelement 42 dargestellt. Dieses ist mittels eines Schraubkörpers 56 an der Antriebseinrichtung 14 angeschraubt. Bei der in Figur 4 gezeigten Ausgestaltung wird damit die Schwingungsentkopplung der Steuerungseinrichtung durchgeführt. Der Befestigungswinkel 42 und die in Figur 3 gezeigte Stützleiste 44 werden hier mit der Blasstation jeweils verschraubt. Die Steuerungseinrichtung 20 ist, wie erwähnt, mit dem Träger- bzw. der Adapterplatte starr verbunden. Dadurch sind der Träger 24 und die Steuerungseinrichtung schwimmend gegenüber der Umformungsstation 4 befestigt, d.h. die Dämpfer ermöglichen bei einer Krafteinwirkung eine relative Bewegung der Steuerungseinrichtung 20 bezüglich der Umformungsstation, und zwar in alle drei Axialrichtungen.

Dabei wäre es möglich, dass die Trägerplatte mit einem relativ hohen Gewicht ausgestattet wird, so dass diese weiterhin nicht übermäßig in Schwingung versetzt wird. Vorteilhaft liegt die Masse dieses Trägers zwischen 0,5kg und 3kg, bevorzugt zwischen 0,5kg und 2kg, bevorzugt zwischen 0,5kg und 1,5kg. Dabei ist es auch möglich, dass die Masse in Abhängigkeit von den auftretenden Schwingungen gewählt ist, beispielsweise so, dass keine Resonanzfrequenzen auftreten. Auch wäre es möglich, dass die Masse dieses Trägers 24 (etwa durch Aufschrauben von zusätzlichen Gewichtsstücken) veränderbar ist.

Je nach Ausführungsform bestehen unterschiedliche Möglichkeiten, das Dämpfungselement (hier 26c) einzubauen. Bei der in Figur 4 gezeigten Ausführungsform wird das Dämpfungselement 26c an beiden Enden mit dem Befestigungswinkel 42 und dem Träger 24 starr verschraubt. Mit seinem elastischen Körper stellt dieses Dämpfungselement 26a, b, c eine zwischen der Umformungsstation und dem elektronischen Bauteil 20 angebrachte flexible Verbindung her. Dabei kann das Dämpfungselement 26c einen Vorsprung 54 aufweisen, der in eine entsprechende Ausnehmung 52 in den Träger 24 eingefügt und bevorzugt eingeschraubt wird. Es sind jedoch hier auch andere Befestigungsmöglichkeiten denkbar.

Wie erwähnt, kann mit dem Dämpfungselement und den beiden weiteren (nicht gezeigten) Dämpfungselementen insbesondere eine schwebende bzw. schwimmende Aufhängung in einer Ebene erreicht werden, die hier zu der Figurenebene senkrecht steht. Daneben erlaubt jedoch das Dämpfungselement auch in einer hierzu transversalen Richtung eine gewisse Schwingung, d.h. hier insbesondere in einer Richtung, die sich senkrecht zu der besagten Ebene bzw. in der Figurenebene erstreckt.

Wie oben erwähnt, kann der Träger 24 in unterschiedlicher Weise bzw. an unterschiedlichen Elementen der Blasformstation angebracht werden. Auch wäre es möglich, den Träger nicht an der Umformungsstation anzuordnen, sondern an dem Blasrad (vgl. Figur 1). Bevorzugt wird der Träger 24 jedoch, wie in Figur 4 gezeigt, stehend, d.h. in vertikaler Ausrichtung, und nicht liegend bzw. in horizontaler Richtung angeordnet bzw. die Dämpfung entsprechend ausgerichtet. Dies beruht darauf, dass die auftretenden Schwingungen sich größtenteils in der zur Figurenebene senkrecht stehenden Richtung auswirken und daher in dieser Richtung die höchsten Erfordernisse an die Dämpfung zu stellen sind. Insbesondere die Reckstangenbewegung wird in besonderer Weise Schwingungen erzeugen, welche in der Längsrichtung L verlaufen. Damit sind die hier gezeigten Dämpfungselemente insbesondere auch geeignet, um derartige Schwingungen zu kompensieren bzw. zu dämpfen.

Es wären jedoch auch andere Ausführungsformen der Dämpfung denkbar. So könnte beispielsweise ein flexibler Rahmen vorgesehen sein, in dem die Trägereinrichtung angeordnet ist. Auch könnten zur Dämpfung Federelemente und dergleichen vorgesehen sein. Die hier gezeigte Ausführungsform mit dem elastomeren Dämpfungselement 26c bietet jedoch den Vorteil, dass diese relativ einfach und kostengünstig zu realisieren ist.

Die Figuren 5a und 5b veranschaulichen insbesondere die Kühlung der Steuerungseinrichtung 20. In diesem Falle wird eine Kühleinrichtung 60 in Form einer Flüssigkeitskühlung vorgesehen. Zu diesem Zweck weist die Antriebseinrichtung 14 Kühlkanäle 62, 64 auf, durch welche ein fließfähiges und insbesondere flüssiges Kühlmedium strömen kann. Im Inneren des Gehäuses 14 ist weiterhin ein Querkanal (nicht sichtbar) vorgesehen, durch welchen das Kühlmedium von dem Kanal 64 zu einem Anschluss 66 gelangen kann. Ausgehend von dem Kanal 66 strömt das Kühlmedium über eine Leitung 68 zu dem Träger bzw. der Adapterplatte 24. Auch dieser Träger weist dabei in seinem Inneren einen Kanal zur Kühlung auf. In Fig. 5b ist auch der zweite Anschluss 67, mit dem die Leitung 68 an dem Träger 24 angeschlossen ist, sichtbar.

Das Bezugszeichen 65 kennzeichnet einen Hohlraum, innerhalb dessen sich das Sekundärteil des Antriebs 14 bewegen kann. Bevorzugt ist die Leitung 68 eine flexible Leitung. Das Bezugszeichen 63 kennzeichnet einen sich in der Längsrichtung L der Antriebseinrichtung 14 bzw. deren Gehäuse erstreckenden Spalt. Gegenüber diesem Spalt 63 ist (vgl. Fig. 5b) eine weitere sich in der Längsrichtung L erstreckende Ausnehmung 69 vorgesehen, die jedoch im Gegensatz zu dem Spalt 63 nicht in der Längsrichtung L durchgängig ausgebildet ist.

In diesem Hohlraum 65 ist bevorzugt eine Spule angeordnet und insbesondere fest angeordnet. Innerhalb dieser Spule kann sich das Sekundärteil bewegen.

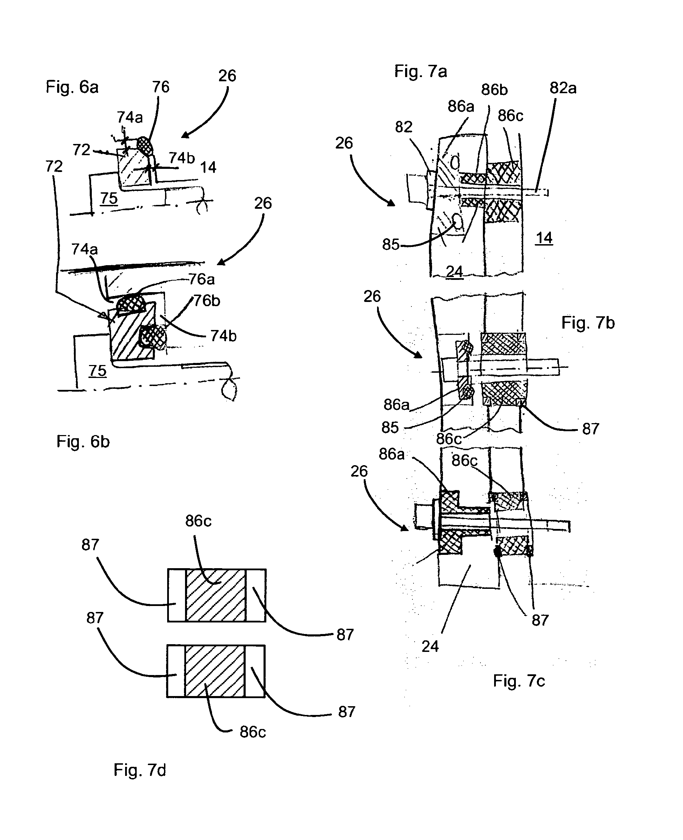

Die Fig. 6a und 6b zeigen eine weitere Ausgestaltung der Dämpfungseinrichtung 26. Bei der in Fig 6a dargestellten Ausführungsform ist mittels eines Befestigungsmittels 75 wie einer Schraube eine Scheibe 72 an der Antriebseinrichtung 14 angeordnet. Diese Scheibe 72, welche aus Metall oder einem Kunststoff hergestellt sein kann, kann dabei fest mit dem (nicht gezeigten) Träger, an dem wiederum die Steuerungseinrichtung angeordnet ist, verbunden sein. Zwischen dieser Scheibe 72 und der Antriebseinrichtung 14 bzw. deren Gehäuse sind zwei Spalte 74a, 74b ausgebildet und in einem Eckbereich ist ein Dämpfungselement 76 wie hier ein O-Ring vorgesehen, der die Antriebseinrichtung 14 und die Scheibe 72 auf Abstand hält und so auch die von der Antriebseinrichtung 14 ausgehenden Schwingungen dämpft.

Die in Fig. 6b gezeigte Ausgestaltung ähnelt der in Fig. 6a gezeigten Ausgestaltung, wobei hier ebenfalls zwei Spalte 74a und 74b vorgesehen sind, jedoch zwei O-Ringe 76a, 76b, welche die Scheibe 72 einerseits und die Antriebseinrichtung 14 andererseits auf Abstand halten und so wieder die Dämpfung bewirken.

Die Figuren 7a - 7d veranschaulichen eine weitere Ausführungsform einer Dämpfungseinrichtung 26. Bei der in Fig. 7a gezeigten Ausführungsform sind drei Elastomerelemente bzw. Dämpfungselemente 86a, 86b, 86c vorgesehen, mittels denen der Träger 24 an der Antriebseinrichtung 14 angeordnet ist. Dabei ist das Dämpfungselement 86c zwischen der Antriebseinrichtung 14 und dem Träger 24 angeordnet. Ein weiteres Dämpfungselement 86a lagert ein Befestigungsmittel 82 gegenüber dem Träger. Dieses Dämpfungselement 86a kann dabei als eine elastomerische Lochscheibe ausgebildet sein. An der dem Träger 24 zugewandten Oberfläche dieser Scheibe 86a kann dabei ein O-Ring 85 vorgesehen sein. Dabei ist es auch möglich, dass die Scheibe 86a selbst starr ist und die Dämpfung durch den O-Ring 85 bewirkt wird. Das Dämpfungselement 86b ist hier als zylindrischer Körper ausgebildet, der den Schaft des Befestigungsmittels 82 umgibt.

Bei der in Fig 7b gezeigten Ausführungsform ist eine Scheibe 86a mittels des O-Rings 85 und dem Befestigungsmittel 82 an der Antriebseinrichtung 14 angeschraubt. Das Dämpfungselement 86c ist hier wieder aus einem Elastomer ausgebildet und weist zusätzlich noch einen ringartigen Körper 87 (der insbesondere aus einem Metall oder einem härteren Kunststoff hergestellt ist) auf. Die Dämpfung wird hier insbesondere durch das Dämpfungselement 86c sowie den O-Ring 85 erreicht. Dieser ringartige Körper 87 bzw. die Metallscheibe 87 dient hier als Zentrierung des Dämpfungselements 86c und kann beispielsweise in das Dämpfungselement 86c einvulkanisiert sein. Dabei ist es möglich, dass diese Scheibe größer ist als die entsprechende Bohrung in dem Träger 24.

Fig 7c zeigt eine weitere Ausführungsform, bei der die in Fig. 7a gezeigten Dämpfungselemente 86a und 86b einteilig ausgebildet sind, wodurch sich die Herstellung vereinfacht.

Fig. 7d zeigt eine weitere Darstellung zur Veranschaulichung des Dämpfungselements 86c, welches hier in zwei Metallscheiben 87 eingebettet ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Transporteinrichtung
- 4: Umformungsstation, Blasstation
- 6a, 6b: Blasformträger
- 8: Beaufschlagungseinrichtung
- 10: Kunststoffvorformling
- 12: Reckstange
- 14: Antrieb
- 20: Steuerungseinrichtung
- 24: Träger
- 26: Dämpfungseinrichtung
- 26a, 26b, 26c: Dämpfungselemente
- 42,44: Halteeinrichtung
- 44a, 44b: Halteelemente
- 52: Ausnehmung
- 54: Vorsprung
- 56: Schraubkörper
- 60: Kühleinrichtung
- 62,64: Kühlkanäle
- 63: Spalt
- 65: Hohlraum
- 66: Anschluss
- 67: Anschluss
- 68: Leitung
- 69: Ausnehmung
- 72: Scheibe
- 74a, 74b: Spalte
- 75: Befestigungsmittel
- 76: Dämpfungselement, O-Ring
- 76a, 76b: Dämpfungselemente, O-Ringe
- 82: Befestigungsmittel
- 85: O-Ring
- 86a-c: Dämpfungselement
- 87: ringartiger Körper, Scheibe

- L: Längsrichtung, Bewegungsrichtung

## Patentansprüche

1. Vorrichtung (1) zum Umformen von Kunststoffvorformlingen (10) zu Kunststoffbehältnissen mit einer Transporteinrichtung (2), an der eine Vielzahl von Umformungsstationen (4) zum Umformen der Kunststoffvorformlinge (10) angeordnet ist, wobei diese Umformungsstationen (4) jeweils zwei bezüglich einander bewegbare Blasformteile (6a, 6b) aufweisen, die zwischen einem geschlossenen Zustand und einem geöffneten Zustand der Umformungsstation (4) bewegt werden können und in dem geschlossenen Zustand der Umformungsstation (4) einen Hohlraum ausbilden, innerhalb dessen die Kunststoffvorformlinge (10) zu den Kunststoffbehältnissen umformbar sind und wobei die Umformungsstationen (4) jeweils eine Beaufschlagungseinrichtung (8) aufweisen, welche die Kunststoffvorformlinge (10) zu deren Expansion mit einem gasförmigen Medium beaufschlagen und wobei die Umformungsstationen (4) jeweils Reckstangen (12) aufweisen, welche in die Kunststoffvorformlinge (10) einführbar sind um diese in ihrer Längsrichtung (L) zu dehnen, wobei die Umformungsstation (4) jeweils wenigstens eine Antriebseinrichtung (14) aufweisen, welche eine für den Umformungsvorgang erforderliche Bewegung antreibt sowie eine Steuerungseinrichtung (20) zum Steuern dieser Antriebseinrichtung (14),
**dadurch gekennzeichnet, dass**
diese Steuerungseinrichtung (20) mittels einer Dämpfungseinrichtung (26) an der Vorrichtung (1) angeordnet ist und so eine gedämpfte Verbindung zwischen der Steuerungseinrichtung (20) und der Vorrichtung besteht.

2. Vorrichtung nach Anspruch 1,
**dadurch gekennzeichnet, dass**
wenigstens eine Antriebseinrichtung (14) eine elektromotorische Antriebseinrichtung (14) ist.

3. Vorrichtung (1) nach Anspruch 1,
**dadurch gekennzeichnet, dass**
eine Antriebseinrichtung (14) zum Bewegen der Reckstange (12) vorgesehen ist und eine Steuerungseinrichtung (20) zum Steuern dieser Antriebseinrichtung (14) mittels
der Dämpfungseinrichtung (26) an der Umformungsstation (4) angeordnet ist.

4. Vorrichtung (1) nach wenigstens einem der vorangegangenen Ansprüche,
**dadurch gekennzeichnet, dass**
die Steuerungseinrichtung (20) wenigstens einen Umrichter aufweist.

5. Vorrichtung (1) nach wenigstens einem der vorangegangenen Ansprüche,
**dadurch gekennzeichnet, dass**
die Steuerungseinrichtung (20) auf einem Träger (24) angeordnet ist und dieser Träger (20) mittels der wenigstens einen Dämpfungseinrichtung (26) an der Umformungsstation (4) angeordnet ist.

6. Vorrichtung (1) nach wenigstens einem der vorangegangenen Ansprüche,
**dadurch gekennzeichnet, dass**
die Dämpfungseinrichtung (26) mehrere Dämpfungselemente (26a, 26b, 26c) aufweist, mittels denen die Steuerungseinrichtung (20) an der Vorrichtung (1) angeordnet ist.

7. Vorrichtung (1) nach wenigstens einem der vorangegangenen Ansprüche,
**dadurch gekennzeichnet, dass**
die Dämpfungseinrichtung (26) wenigstens ein aus einem Elastomer hergestelltes Dämpfungselement (26a, 26b, 26c) aufweist.

8. Vorrichtung (1) nach wenigstens einem der vorangegangenen Ansprüche,
**dadurch gekennzeichnet, dass**
die Dämpfungseinrichtung (26) ein Dämpfungselement (26a, 26b, 26c) aufweist, welches eine Dichte von weniger als 2,1g/cm³ aufweist.

9. Vorrichtung (1) nach wenigstens einem der vorangegangenen Ansprüche,
**dadurch gekennzeichnet, dass**
eine Kühleinrichtung (60) zum Kühlen der Steuerungseinrichtung (20) und/oder des von dieser Steuerungseinrichtung gesteuerten Antriebs (14) vorgesehen ist.

10. Vorrichtung (1) nach wenigstens einem der vorangegangenen Ansprüche,
**dadurch gekennzeichnet, dass**
die Dämpfungseinrichtung (26) innerhalb eines Teilkreises der Transporteinrichtung (2) angeordnet ist.

11. Verfahren zum Umformen von Kunststoffvorformlingen (10) zu Kunststoffbehältnissen, wobei Kunststoffvorformlinge (10) mittels wenigstens einer an einer Transporteinrichtung (2) angeordneten Umformungsstation (4) zu den Kunststoffbehältnissen umgeformt werden und zum Zweck dieser Umformung mittels wenigstens einer Beaufschlagungseinrichtung (8) mit einem fließfähigen Medium beaufschlagt werden und wobei die Unformungsstation (4) zur Umformung der Kunststoffvorformlinge (10) mit wenigstens einer Antriebseinrichtung (14) eine Vielzahl von Bewegungen durchführt und diese Antriebseinrichtung (14) von einer Steuerungseinrichtung (20) gesteuert wird,
**dadurch gekennzeichnet, dass**
die Steuerungseinrichtung (20) mittels einer Dämpfungseinrichtung (26) derart an der Vorrichtung (1) angeordnet ist, dass durch die Bewegungen hervorgerufene Schwingungen nicht ungedämpft an die Steuerungseinrichtung (20) übertragen werden.

## Claims

1. An apparatus (1) for the shaping of plastics material preforms (10) into plastics material containers with a conveying device (2) on which are arranged a plurality of shaping stations (4) for the shaping of the plastics material preforms (10), wherein these shaping stations (4) have in each case two blow mould parts (6a, 6b) which are movable with respect to each other and which can be moved between a closed state and an opened state of the shaping station (4) and in the closed state of the shaping station (4) form a cavity, inside which the plastics material preforms (10) are capable of being shaped into the plastics material containers, and wherein the shaping stations (4) have in each case a stressing device (8) which act upon the plastics material preforms (10) with a gaseous medium in order to expand them, and wherein the shaping stations (4) have in each case stretch bars (12) which are capable of being inserted into the plastics material preforms (10) in order to stretch them in the longitudinal direction (L) thereof, wherein the shaping stations (4) have in each case at least one drive device (14) which drives a movement necessary for the shaping procedure, and a control device (20) for controlling this drive device (14), **characterized in that** this control device (20) is arranged on the apparatus (1) by means of a damping device (26) and that in this way a damped linkage between the control device (20) and the apparatus consists.

2. An apparatus according to claim 1, **characterized in that** at least one drive device (14) is an electric-motor drive device (14).

3. An apparatus (1) according to claim 1, **characterized in that** a drive device (14) for moving the stretch bar (12) is provided and a control device (20) for controlling this drive device (14) is arranged on the shaping station (4) by means of the damping device (26).

4. An apparatus (1) according to at least one of the preceding claims, **characterized in that** the control device (20) has at least one inverter.

5. An apparatus (1) according to at least one of the preceding claims, **characterized in that** the control device (20) is arranged on a carrier (24) and this carrier (20) is arranged on the shaping station (4) by means of the at least one damping device (26).

6. An apparatus (1) according to at least one of the preceding claims, **characterized in that** the damping device (26) has a plurality of damping elements (26a, 26b, 26c), by means of which the control device (20) is arranged on the apparatus (1).

7. An apparatus (1) according to at least one of the preceding claims, **characterized in that** the damping device (26) has at least one damping element (26a, 26b, 26c) produced from an elastomer.

8. An apparatus (1) according to at least one of the preceding claims, **characterized in that** the damping device (26) has a damping element (26a, 26b, 26c) which has a density of less than 2.1 g/cm³.

9. An apparatus (1) according to at least one of the preceding claims, **characterized in that** a cooling device (60) is provided for cooling the control device (20) and/or the drive (14) controlled by the aforesaid control device.

10. An apparatus (1) according to at least one of the preceding claims, **characterized in that** the damping device (26) is arranged inside a reference circle of the conveying device (2).

11. A method of shaping plastics material pre-forms (10) into plastics material containers, wherein plastics material preforms (10) are shaped into the plastics material containers by means of at least one shaping station (4) arranged on a conveying device (2) and are acted upon with a flowable medium by means of at least one stressing device (8) for the purpose of this shaping, and wherein the shaping station (4) for shaping the plastics material preforms (10) performs a plurality of movements with at least one drive device (14) and this drive device (14) is controlled by a control device (20), **characterized in that** the control device (20) is arranged on the apparatus (1) by means of a damping device (26) in such a way that oscillations caused by the movements are not transmitted in an undamped manner to the control device (20).

## Revendications

1. Dispositif (1) de façonnage de préformes en matière plastique (10) permettant d'obtenir des récipients en matière plastique, ledit dispositif comprenant une unité de transport (2) sur laquelle sont disposés une pluralité de postes de façonnage (4) destinés à façonner lesdites préformes en matière plastique (10), ces postes de façonnage (4) comprenant chacun deux parties de moulage par soufflage (6a, 6b) mobiles l'une par rapport à l'autre, qui peuvent être déplacées entre un état fermé et un état ouvert du poste de façonnage (4) et qui forment, une fois le poste de façonnage (4) fermé, une cavité à l'intérieur de laquelle les préformes en matière plastique (10) peuvent être façonnées de manière à obtenir les récipients en matière plastique, et les postes de façonnage (4) comprenant chacun une unité d'exposition (8), lesquelles exposent les préformes en matière plastique (10) à un milieu gazeux pour les faire se dilater, et les postes de façonnage (4) comprenant chacun des barres d'étirage (12), lesquelles peuvent être introduites dans les préformes en matière plastique (10) de manière à ce que lesdites préformes s'étirent dans leur direction longitudinale (L) autour desdites barres, les postes de façonnage (4) comprenant chacun au moins une unité d'entraînement (14), laquelle déclenche le mouvement nécessaire à l'opération de façonnage, et une unité de commande (20) destinée à commander cette unité d'entraînement (14),
**caractérisé en ce que**
cette unité de commande (20) est disposée sur le dispositif (1) au moyen d'une unité d'amortissement (26), et une liaison amortie est ainsi établie entre l'unité de commande (20) et le dispositif.

2. Dispositif selon la revendication 1,
**caractérisé en ce**
**qu'**au moins une unité d'entraînement (14) est une unité d'entraînement électromoteur (14).

3. Dispositif (1) selon la revendication 1,
**caractérisé en ce**
**qu'**une unité d'entraînement (14) est destinée à déplacer la barre d'étirage (12) et une unité de commande (20) destinée à commander cette unité d'entraînement (14) est disposée sur le poste de façonnage (4) au moyen de l'unité d'amortissement (26).

4. Dispositif (1) selon au moins l'une des revendications précédentes,
**caractérisé en ce que**
l'unité de commande (20) comprend au moins un convertisseur.

5. Dispositif (1) selon au moins l'une des revendications précédentes,
**caractérisé en ce que**
l'unité de commande (20) est disposée sur un support (24) et ce support (20) est disposé sur le poste de façonnage (4) au moyen du ou des unités d'amortissement (26).

6. Dispositif (1) selon au moins l'une des revendications précédentes,
**caractérisé en ce que**
l'unité d'amortissement (26) comprend plusieurs éléments d'amortissement (26a, 26b, 26c) au moyen desquels l'unité de commande (20) est disposée sur le dispositif (1).

7. Dispositif (1) selon au moins l'une des revendications précédentes,
**caractérisé en ce que**
l'unité d'amortissement (26) comprend au moins un élément d'amortissement (26a, 26b, 26c) obtenu à partir d'un élastomère.

8. Dispositif (1) selon au moins l'une des revendications précédentes,
**caractérisé en ce que**
l'unité d'amortissement (26) comprend un élément d'amortissement (26a, 26b, 26c), lequel présente une densité inférieure à 2,1 g/cm³.

9. Dispositif (1) selon au moins l'une des revendications précédentes,
**caractérisé en ce**
**qu'**une unité de refroidissement (60) est destinée à refroidir l'unité de commande (20) et/ou l'entraînement (14) commandé par cette unité de commande.

10. Dispositif (1) selon au moins l'une des revendications précédentes,
**caractérisé en ce que**
l'unité d'amortissement (26) est disposée à l'intérieur d'un cercle primitif de l'unité de transport (2).

11. Procédé de façonnage de préformes en matière plastique (10) de manière à obtenir des récipients en matière plastique, des préformes en matière plastique (10) étant façonnées au moyen d'au moins un poste de façonnage (4) disposé sur une unité de transport (2) de manière à obtenir les récipients en matière plastique et, pour mettre en oeuvre ce façonnage, lesdites préformes étant exposées à un milieu fluide au moyen d'au moins une unité d'exposition (8), et le poste de façonnage (4) destiné à façonner les préformes en matière plastique (10) exécutant une pluralité de mouvements au moyen d'au moins une unité d'entraînement (14), et cette unité d'entraînement (14) étant commandée par une unité de commande (20),
**caractérisé en ce que** l'unité de commande (20) est disposée sur le dispositif (1) au moyen d'une unité d'amortissement (26), de telle sorte que les vibrations provoquées par lesdits mouvements sont transmises à l'unité de commande (20) en étant amorties.
